# EUROPÄISCHE PATENTSCHRIFT

(11) **EP 1 467 876 B1**
(45) Veröffentlichungstag und Bekanntmachung des Hinweises auf die Patenterteilung: **20.04.2005**
(21) Anmeldenummer: 03701501.3
(22) Anmeldetag: 10.01.2003
(51) Int. Cl.: B60B 3/06, B60B 3/10

(54) **GEGOSSENE ALU-FELGE FÜR PERSONENKRAFTWAGEN**
CAST ALUMINIUM WHEEL FOR PASSENGER CARS
JANTE ALUMINIUM COULEE POUR AUTOMOBILE

(30) Priorität: 12.01.2002 DE 20200429 U
(43) Veröffentlichungstag der Anmeldung: 20.10.2004
(73) Patentinhaber: Power Tech Wheel GmbH, 56235 Ransbach-Baumbach (DE)
(72) Erfinder: FISCHER, Heinz-Hermann, 56235 Ransbach-Baumbach (DE)
(74) Vertreter: Wolff, Felix, Dr.
(86) Internationale Anmeldenummer: PCT/EP2003/000177
(87) Internationale Veröffentlichungsnummer: WO 2003/057511

(56) Entgegenhaltungen:
- EP-A- 1 241 023
- GB-A- 1 230 169
- JP-A- 52 149 701
- US-A- 3 528 706

## Beschreibung

Die Erfindung bezieht sich auf eine gegossene Alu-Felge für Personenkraftwagen mit den Merkmalen bzw. Maßnahmen nach dem Oberbegriff von Anspruch 1 bzw. 5, wie sie aus der GB-C-1 230 169 bekannt sind.

Die Reifen für Kraftfahrzeuge sind grundsätzlich auf Felgen montiert. Dazu weisen die Felgen ein umlaufendes Montagebett auf, welches mit einer auf einer Achse befestigbaren Nabe verbunden ist. Felgen für Personenkraftwagen bestehen entweder aus Stahl oder Aluminium. Dabei wird vielfach kein reines Aluminium verwendet, sondern das Aluminium besitzt sogenannte Legierungsbestandteile, durch die dessen Festigkeitseigenschaften verbessert werden. Alu-Felgen für Personenkraftwagen werden normalerweise durch einen Gießvorgang hergestellt und das Montagebett ist hier über Speichen mit der Nabe verbunden. Die Anzahl und die Form der Speichen kann dabei in vorgegebenen Grenzen frei gewählt werden. Durch die Herstellung der Alu-Felgen durch einen Gießvorgang bedingt, ist für jede Form einer Felge - immer nur auf eine Reifengröße bezogen - eine besondere Gießform erforderlich. Unterschiedliche Speichenzahlen und/oder Speichenformen erfordern somit unterschiedliche Gießformen, die immer nur bedarfsweise verwendet werden und die eine aufwendige Lagerhaltung erforderlich machen. Änderungen an einer durch einen Gießvorgang hergestellten Alu-Felge sind nicht möglich.

Der Erfindung liegt nun die Aufgabe zugrunde, eine gegossene Alu-Felge für Personenwagen zu schaffen, deren Aussehen in gewissen Grenzen verändert und damit dem Kundenwunsch angepaßt werden kann.

Zur Lösung dieser Aufgabe werden die Maßnahmen der Ansprüche 1 bzw. 5

Durch eine solche Ausgestaltung einer gegossenen Alu-Felge ist es möglich, die Form bzw. das Aussehen der Alu-Felge, von einer gegossenen Felge ausgehend, vielfältig zu verändern und so den unterschiedlichen Kundenwünschen anzupassen. Dadurch kann die Anzahl der benötigten Gießformen erheblich reduziert und somit die Lagerhaltung verringert werden.

Die Ausfräsungen können sich dabei entweder aus sogenannte Vertiefungen in äußeren Wandung der Schüssel befinden oder als die Wandung durchdringende Öffnungen ausgebildet sein. Die Form der Ausfräsungen kann, sofern nicht die rippenartigen Speichen beeinträchtigt werden, weitgehend beliebig sein. Sie können als Buchstaben, geometrische Figuren oder unterschiedliche Abbildungen ausgebildet sein.

Die Erfindung wird nachfolgend anhand in einer Zeichnung dargestellter Ausführungsbeispiele näher erläutert. Dabei zeigen
- Fig.1: eine Vorderansicht einer gegossenen Alu-Felge mit unterschiedlichen Ausfräsungen und
- Fig.2: eine weitere Ausgestaltung einer Felge mit anders gestalteten Ausfräsungen.

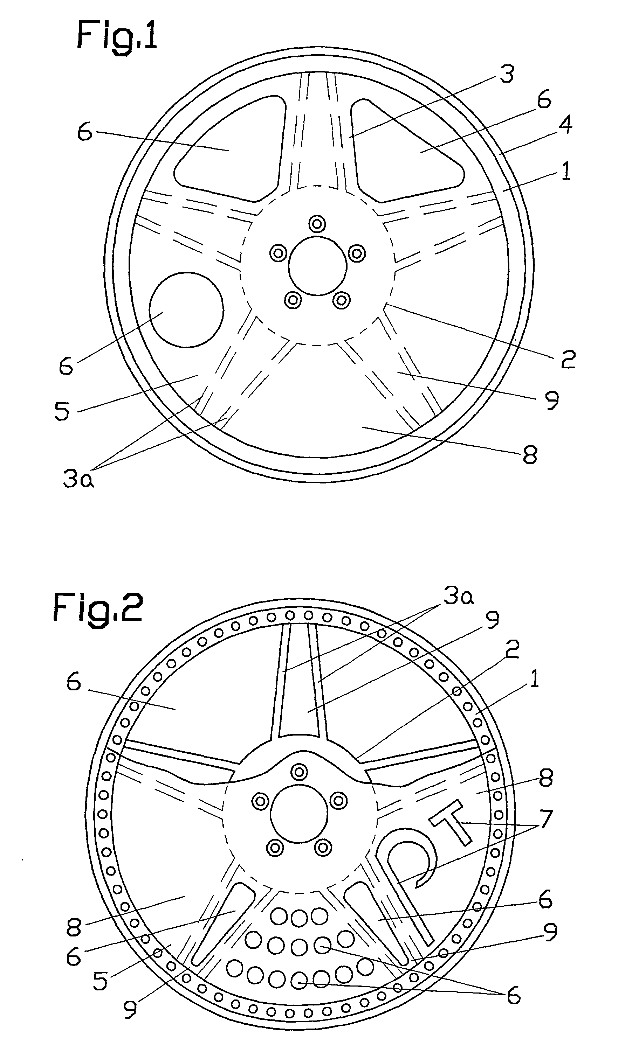

In den Figuren 1 und 2 der Zeichnung ist jeweils eine Alu-Felge 1 gezeigt, die zunächst durch einen Gießvorgang hergestellt wurde. Dabei besteht jede Felge 1 aus einer Nabe 2, über die die Alu-Felge 1 auf einer Achse befestigbar ist. Von der Nabe 2 aus führen im dargestellten Ausführungsbeispiel fünf Speichen 3 radial nach außen, wobei jede Speiche 3 durch zwei mit Abstand spiegelbildlich zueinander verlaufenden Rippen 3a gebildet ist. Alle Speichen 3 enden in einem sogenannten Montagebett 4, welches als Tiefbett ausgebildet ist und einen nicht dargestellten Fahrzeugreifen aufnehmen kann. Die Rippen 3a aller Speichen 3 sind durch eine sogenannte Schüssel 5 abgedeckt, die verhältnismäßig dünnwandig ausgebildet sein kann und die sich zwischen der Nabe 2 und dem Montagebett 4 der Alu-Felge 1 erstreckt. Die Schüssel 5 ist in vorteilhafter Weise umlaufend profiliert ausgebildet und kann bedarfsweise in radialer Richtung verlaufende Erhöhungen oder Vertiefungen besitzen. Insbesondere im Bereich der Rippen 3a einer Speiche 3 kann die Schüssel 5 in radialer Richtung nach außen gewölbt verlaufen.

Die Alu-Felgen 1 gemäß den Figuren 1 und 2, insbesondere deren Schüsseln 5 besitzen nach dem Gießvorgang zunächst keinerlei Öffnungen 6 oder Vertiefungen 7. Gemäß dem Ausführungsbeispiel der Fig.1 sind nun in den Bereichen 8 zwischen den einzelnen Speichen 3 als Öffnungen ausgebildete Ausfräsungen 6 vorgesehen, von denen in der Fig.1 der Zeichnung nur drei mögliche Formen der Ausfräsungen 6 gezeigt sind. Zwei Bereiche 8 der Schüssel 5 weisen gemäß der gewählten Darstellung der Fig.1 keine Ausfräsungen auf. Normalerweise sind jedoch in allen Bereichen 8 der Alu-Felge 1 Ausfräsungen vorgesehen, die alle die gleiche Form besitzen. Dabei sind normalerweise keine Bereiche 8 vorhanden, in denen eine Öffnung 6 fehlt. Gemäß der in der Fig.1 gewählten Darstellung sind die Öffnungen 6 kreisförmig oder dreieckförmig ausgebildet. Auch andere Formen bzw. Ausgestaltungen der Öffnungen 6 sind möglich. Bedarfsweise kann auch in den Bereichen 9 zwischen den beiden Rippen 4 einer Speiche 3 eine durch eine Ausfräsung gebildete Öffnung 6 vorgesehen sein. Bei der Herstellung der Öffnung 6 in diesen Bereichen 9 ist jedoch darauf zu achten, daß die Rippen 3a der Speichen 3 nicht beschädigt werden, da dadurch die Stabilität der Alu-Felge 1 beeinträchtigt werden kann.

Auch die in der Fig.2 gezeigte Alu-Felge 1 weist zwischen den Speichen 3 Bereiche 8 auf, in denen die Schüssel 5 mit Ausfräsungen versehen ist. Im oberen Bereich der Alu-Felge 1 der Fig.1 sind die Ausfräsungen als durchgehende Öffnungen 6 ausgebildet, die sich über den gesamten Bereich 8 erstrecken, der sich zwischen der Nabe 2, dem Montagebett 4 und den Rippen 3a befindet. Dadurch sind die Rippen 3a im oberen Bereich der Alu-Felge 1 der Fig.2 auch von vorne sichtbar. Auch der Bereich 9 zwischen zwei benachbarten Rippen 3a ist hier vollständig ausgefräst. Im unteren Teil der Alu-Felge 1 der Fig.2 sind in den Bereichen 9 zwischen zwei benachbarten Rippen 3a Öffnungen 6 ein gearbeitet, die hier eine langgestreckte und radial verlaufende Form besitzen. In dem unteren Bereich 8 der Schüssel 5 befindet sich zusätzlich eine Vielzahl von Öffnungen 6, die durchgehend ausgebildet sind und die hier eine kreisförmige Gestalt besitzen.

Im rechten unteren Bereich 8 der Alu-Felge 1 befinden sich Ausfräsungen, die hier als Vertiefungen 7 ausgebildet sind und sich nicht durch die gesamte Wandung der Schüssel 5 erstrecken. Die Vertiefungen 7 weisen hier die Form von Buchstaben auf. Auch andere Ausgestaltungen der Vertiefungen 7, beispielsweise als geometrische Figuren oder Abbildungen, sind möglich.

Die in den Figuren 1 und 2 der Zeichnung dargestellten Alu-Felgen 1 sind mit fünf durch Rippen 3a gebildeten Speichen 3 versehen. Auch eine andere Anzahl und Ausbildung der Speichen 3 kann gewählt werden. Hinsichtlich der Öffnungen 6 und der Vertiefungen 7 ist jedoch darauf zu achten, daß dieselben symmetrisch angeordnet sind und keine Unwucht der Alu-Felge herbeiführen.

## Patentansprüche

1. Gegossene Alu-Felge für Personenkraftwagen, bestehend aus einer auf einer Achse befestigbaren Nabe und einem die Nabe mit Abstand umschließenden, umlaufenden und einen Fahrzeugreifen aufnehmenden Montagebett, wobei insbesondere Bohrungen in der Nabe zum Befestigen der Alufelge auf der Achse vorgesehen sind, wobei das Montagebett über mindestens drei rippenartige Speichen mit der Nabe verbunden ist, wobei das Montagebett (4) mit der Nabe (2) zusätzlich durch eine einstückig mit den Speichen (3) gegossene Schüssel (5) verbunden ist, **dadurch gekennzeichnet, dass** die Schüssel (5) in ihren zwischen den Speichen (3) befindlichen Bereichen (8, 9) Ausfräsungen aufweist.

2. Felge nach Anspruch 1,
**dadurch gekennzeichnet,**
**daß** die Ausfräsungen als in der sichtbaren Wandung der Schüssel (5) befindliche Vertiefungen (7) ausgebildet sind.

3. Felge nach Anspruch 1 oder 2,
**dadurch gekennzeichnet,**
**daß** die Ausfräsungen als die Wandung der Schüssel (5) durchdringende Öffnungen (6) ausgebildet sind.

4. Felge nach mindestens einem der Ansprüche 1 bis 3,
**dadurch gekennzeichnet,**
**daß** die Ausfräsungen als Buchstaben, geometrische Figuren oder Abbildungen ausgebildet sind.

5. Verfahren zur Herstellung einer gegossenen Alufelge für Persenenkraftwagen, wobei die Felge aus einer auf einer Achse befestigbaran Nabe und einem die Nabe mit Abstand umschließenden, umlaufenden und einen Fahrzeugreifen aufnehmenden Montagebett besteht, wobei das Montagebett über mindestens drei rippenartige Speichen mit der Nabe verbunden ist, **dadurch gekennzeichnet, daß** das Montagebett (4) mit der Nabe (2) zusätzlich durch eine einstückig mit den Speichen (3) gegossene Schüssel (5) verbunden wird, wobei in den zwischen den Speichen (3) befindlichen Bereichen (8, 9) der Schüssel (5) -Ausfräsungen eingebracht werden und wobei die Schüssel (5) nach dem Gießvorgang zunächst keinerlei Öffnungen besitzt.

## Claims

1. A cast aluminum wheel for passenger cars, comprising a hub attachable on an axle and a mounting bed, which encloses the hub at a distance, revolves, and accommodates a vehicle tire, holes particularly being provided in the hub for attaching the aluminum wheel to the axle, the mounting bed being connected to the hub via at least three ribbed spokes, the mounting bed (4) additionally being connected to the hub (2) by a bowl (5) cast in one piece with the spokes (3),
**characterized in that** the bowl (5) has milled-out points in its regions (8, 9) located between the spokes (3).

2. The wheel according to Claim 1,
**characterized in that** the milled-out points are implemented as depressions (7) located in the visible wall of the bowl (5).

3. The wheel according to Claim 1 or 2,
**characterized in that** the milled-out points are implemented as openings (6) which penetrate the wall of the bowl (5).

4. The wheel according to at least one of Claims 1 through 3,
**characterized in that** the milled-out points are implemented as letters, geometrical figures, or images.

5. A method for manufacturing a cast aluminum wheel for passenger cars, the wheel comprising a hub attachable on an axle and a mounting bed, which encloses the hub at a distance, revolves, and accommodates a vehicle tire, the mounting bed being connected to the hub via at least three ribbed spokes,
**characterized in that** the mounting bed (4) is additionally connected to the hub (2) by a bowl (5) cast in one piece with the spokes (3), milled-out points being introduced into the regions (8, 9) of the bowl (5) located between the spokes (3) and the bowl (5) initially having no openings after the casting procedure.

## Revendications

1. Jante aluminium coulée pour automobile, comprenant un moyeu pouvant être fixé sur un essieu et un support de montage entourant le moyeu à distance, rotatif et recevant un pneu de véhicule, en particulier des alésages étant prévus dans le moyeu pour la fixation de la jante alu sur l'essieu, le support de montage étant relié au moyeu au moyen d'au moins trois rayons du type nervures, le support de montage (4) étant relié au moyeu (2) en supplément par une soucoupe (5) coulée d'une seule pièce avec les rayons (3), **caractérisé en ce que** la soucoupe (5) présente des parties fraisées dans ses zones (8, 9) se trouvant entre les rayons (3).

2. Jante selon la revendication 1,
**caractérisé en ce que**
les parties fraisées sont réalisées comme des cavités (7) se trouvant dans la paroi visible de la soucoupe (5) .

3. Jante selon la revendication 1 ou 2,
**caractérisé en ce que**
les parties fraisées sont réalisées comme des ouvertures (6) traversant la paroi de la soucoupe (5).

4. Jante selon au moins l'une quelconque des revendications 1 à 3,
**caractérisé en ce que**
les parties fraisées sont conçues comme des lettres, des formes géométriques ou des figures.

5. Procédé pour fabriquer une jante aluminium coulée pour automobile, la jante comprenant un moyeu pouvant être fixé sur un essieu et un support de montage entourant le moyeu à distance, rotatif et recevant un pneu de véhicule, le support de montage étant relié au moyeu au moyen d'au moins trois rayons du type nervures, le support de montage (4) étant relié au moyeu (2) en supplément par une soucoupe (5) coulée d'une seule pièce avec les rayons (3), **caractérisé en ce que** le support de montage (4) est relié au moyeu (2) en supplément par une soucoupe (5) coulée d'une seule pièce avec les rayons (3), des parties fraisées étant introduites dans les zones (8, 9), se trouvant entre les rayons (3), de la soucoupe (5) et de la soucoupe (5) ne présentant pas pour commencer des ouvertures après l'opération de coulée.
